# EUROPEAN PATENT SPECIFICATION

(11) **EP 0 990 556 B1**
(45) Date of publication and mention of the grant of the patent: **10.11.2004**
(21) Application number: 99307748.6
(22) Date of filing: 30.09.1999
(51) Int. Cl.: B60N 3/00

(54) **Vehicle seating assembly**
Fahrzeugsitz
Siège pour véhicule

(30) Priority: 30.09.1998 GB 9821172
(43) Date of publication of application: 05.04.2000
(73) Proprietor: Intier Automotive Seating Systems GmbH, 63762 Grossostheim-Ringheim (DE)
(72) Inventor: Wolfrum, Dieter Magna Seating Systems GmbH, 97816 Lohr/Main (DE)
(74) Representative: Pfiz, Thomas, Dr.

(56) References cited:
- DE-A- 4 121 660
- US-A- 2 469 657

## Description

The present invention relates to a vehicle seating assembly according to the preamble of claim 1, as known from US-A-2 469 657. In particular, but not exclusively, the invention relates to motor land vehicle (for example, car) seats that incorporate a table for use by a passenger seated behind the seat.

An aim of the present invention is to provide improvements generally to seating assemblies for vehicles. More specifically, an aim of the invention is to provide a seating assembly that can provide a table for use by a person sitting behind the seating assembly.

The invention provides a seating assembly for a vehicle according to claim 1.

Preferably, there is a plurality of said second locations, at which the table may be opened such that the height of its leaf can be selected by a user. The first location is typically below the or either of the second locations, and more typically at or close to the lower extreme of the sliding movement of the leaf.

The leaf of a seating assembly embodying the invention preferably includes a supporting surface which is generally horizontal when the leaf is in the open position.

In preferred embodiments of a seating assembly embodying the invention, the seat back carries one or more channels within which guide elements of the leaf can slide. Most typically, such a seating assembly has two opposed channels having mutually facing open faces between which the leaf is slidably carried on a pair of guide elements.

Preferably, such channels are located on opposite side walls of a recess in the seat back. This permits the leaf to be partially or entirely received within the recess when in the closed position, whereby it may be flush with the seat back while in the closed position.

In embodiments according to either of the last two preceding paragraphs the or each channel may have formations which permit limited pivotal rotation of the guide elements when the leaf is at either of the first or second locations, such pivotal rotation being prevented when the leaf is remote from the first or second locations. Thus, the leaf can be pivoted only at discrete and separate positions as it slides along the channels. For example, the guide elements may be rectangularly-shaped projections of the leaf and the pivot formations may be complementarily-shaped (e.g. substantially rectangular) notches of the channels.

From a third aspect, the invention provides a front seat for a car incorporating a seating assembly according to either the first or the second aspect defined above.

From yet another aspect, the invention provides a motor road vehicle such as a car incorporating a seating assembly according to either the first or the second aspect defined above.

An embodiment of the invention will now be described, by way of example, with reference to the accompanying drawings, in which:
Figure 1 is a cross-sectional side view of a back of a seat embodying the invention, showing a table assembly in opened, semi-opened and closed positions;
Figure 2 is a perspective view, showing the table assembly of Figure 1 in an opened position;
Figure 3 is a rear view of the table assembly, showing the table assembly in a closed position;
Figure 4 is a section on line A-A of Figure 3;
Figure 5 is a section on line B-B of Figure 3;
Figure 6 is a side view of the table assembly in the direction of arrow Z of Figure 3; and
Figure 7 is a section on line C-C of Figure 3.

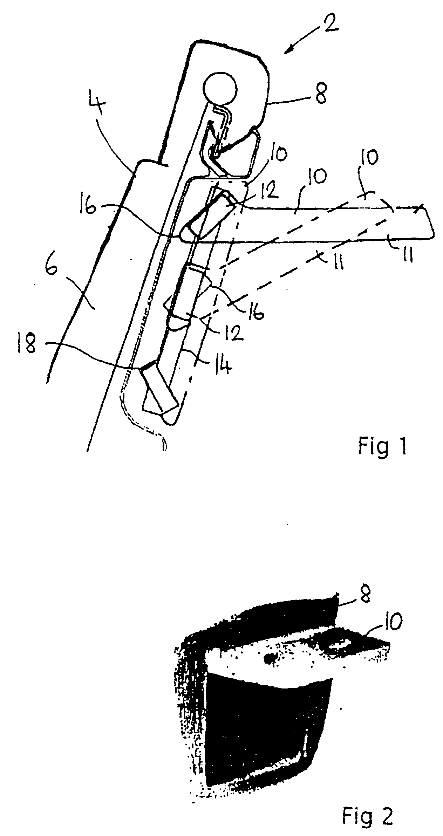

A seat assembly embodying the invention includes a seat having a base (not shown) and a back 2 as illustrated in Figs. 1 and 2. This exemplary embodiment is intended for use in a motor road vehicle, and is intended to be mounted directly in front of another seat in the vehicle. The seat is therefore constructed in a accordance with relevant motor vehicle standards and practices which will be familiar to those skilled in the art. For example, the seat may be suitable for use as the front seat of a passenger car.

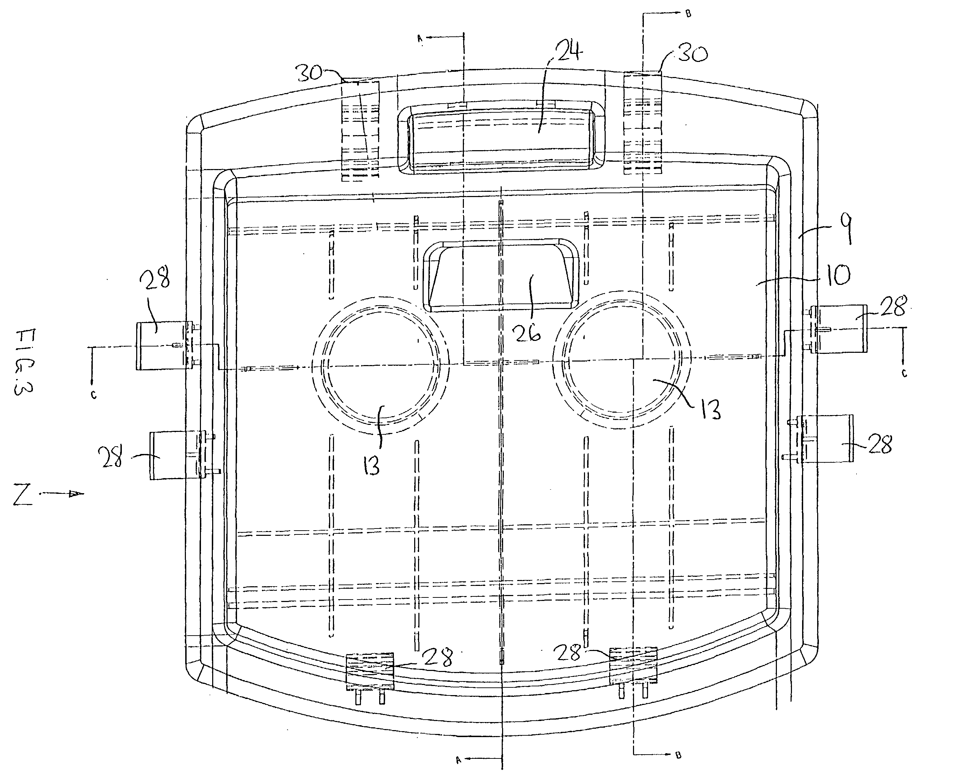

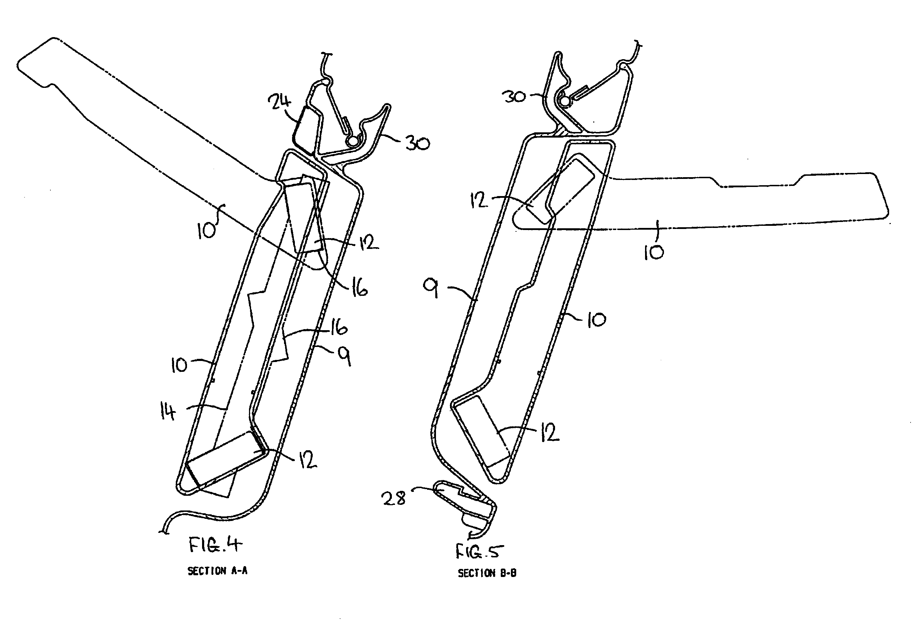

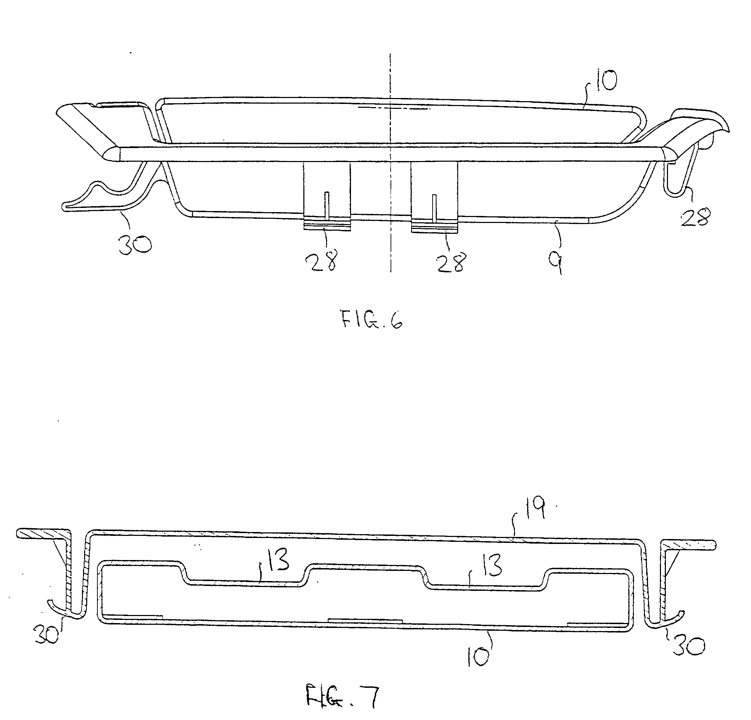

With reference to Figs. 1 to 7, the seat back 2 has a front surface 4 that is provided with cushions 6 to support an occupant of the seat, and a rear surface 8. A table assembly is constructed in the back 2 of the seat for use by a passenger behind the seat, for example a passenger sitting in the rear seat of a car. The construction of the table assembly will now be described.

The table assembly includes a frame assembly 9 and a leaf 10, and is located within a recess 22 formed in the rear surface 8 of the seat back 2. The recess 22 extends part way across the width of the seat back 2. The leaf 10 is formed with a generally flat, substantially rectangular supporting surface suitable for supporting objects when the leaf is in its open position. Lateral side walls 11 of the leaf 10 extend from opposite side regions of the supporting surface, such that the leaf 10 has a general cross-sectional U-shape. When the leaf 10 is in its open position, the side walls 11 extend downwardly from the supporting surface to provide the leaf 10 with strength and rigidity.

At the forward ends of the side walls 11, there is provided a pair of substantially rectangular projecting guide elements (slider blocks) 12 each of which projects outwardly from a respective one of the side walls. Each guide element 12 has a long axis which is angled with respect to the supporting surface of the leaf 10. The supporting surface has depressions 13 and/or other formations for retaining objects placed thereon.

At each of two opposite sides of the frame assembly 9 there is provided a respective channel 14. The two channels have respective open sides that face one another across the recess 22. The channels 14 extend substantially parallel to the rear surface 8 of the seat back 2. The channels are shaped and dimensioned such that each of the guide elements 12 is a close, sliding fit within a respective one of the channels.

Each channel 14 is provided with two pairs of moulded notches 16. (A greater or lesser number of notches 16 may be provided in other embodiments.) The notches 16 are approximately rectangular and are dimensioned such that they can accommodate the guide elements 12. Each notch has a long axis which is directed upwardly and rearwardly of the seat back 2. The angle is chosen such that the supporting surface of the leaf 10 is substantially horizontal when the long axes of the guide elements are in alignment with the long axes of the notches 16. When the guide elements 12 are adjacent to the notches 16 in the channels 14, they may pivot within the channels 14 to allow pivoting movement of the leaf 10 about a substantially horizontal pivot axis. In such a condition, the leaf 10 can pivot between an open position in which the supporting surface of the table is substantially horizontal and a tilted position in which the table is tilted upwards at an angle of about 30° to the horizontal. However, the notches and the guide elements are shaped and dimensioned to prevent pivoting movement of the leaf 10 in a direction downward from its open position.

With the leaf in the tilted position, the long axis of its guide elements is parallel to the channels 14, so that the guide elements can slide along the channels. Towards the lower ends of the channels 14, a lower pair of notches 18 is provided to accommodate the guide elements 12 and allow pivoting movement of the leaf 10 between the tilted position and a closed position in which it lies flush with the rear surface 8 of the seat back 2.

In Figure 1, the leaf 10 is shown in its open position in solid lines, in its tilted position in broken lines and in its closed position in chain lines.

The table assembly may optionally be provided with a locking device (not shown), which can be operated to lock the leaf 10 in the closed position.

To open the table assembly, the locking device (if provided) is unlocked to release the leaf 10 which is then rotated downwards through an angle of approximately 45° from its closed position flush with the seat back to the tilted position, in which the guide elements 12 lie parallel with the channels 14. The table is lifted to the desired height as determined by the positions of the upper pairs of notches 16 and is then rotated through a further 30° to the substantially horizontal open position. In the horizontal position, the guide elements 12 engage the notches 16, locking the table in position at the chosen height.

To close the table, the leaf 10 is pivoted to the tilted position and then pushed such that the guide elements slide down the channels 14 to the lower pair of notches 18. It is then pivoted to the closed position and locked in that position.

The table assembly further includes a light 24 mounted in the frame 9 for illuminating the surface of the leaf 10, and a finger grip 26 moulded in the underside of the leaf 10. Resilient clips 28 and hooks 30 are provided on the frame assembly 9 for securing the table assembly to the seat back 2 within the recess 22.

## Claims

1. A seating assembly for a vehicle comprising a seat having a base and a back (2), the seat assembly further including a table assembly including a leaf (10) attached to the seat back (2) the leaf being slideable and pivotable with respect to the seat back (2) **characterised in that** the leaf (10) is slidable between a first location at which it can be pivoted only between a closed and a tilted position and a second location at which it can be pivoted only between the said tilted position and an open position.

2. A seating assembly according to claim 1 in which there is a plurality of said second locations at which the table may be opened.

3. A seating assembly according to claim 1 or claim 2 in which the leaf (10) includes a supporting surface which is generally horizontal when the leaf (10) is in the open position.

4. A seating assembly according to any preceding claim in which the seat back (2) carries one or more channels (14) within which guide elements (12) of the leaf (10) can slide.

5. A seating assembly according to claim 4 having two opposed channels (14) having mutually facing open faces between which the leaf (10) is slidably carried on a pair of guide elements (12).

6. A seating assembly according to claim 5 in which the channels are located on opposite side walls of a recess (22) in the seat back (2).

7. A seating assembly according to any one of claims 4 to 6 in which the or each channel has pivot formations (16,18) which permit limited pivotal rotation of the guide elements (12) when the leaf (10) is at either of the first or second locations, such pivotal rotation being prevented when the leaf is remote from the first or second locations.

8. A seating assembly according to claim 7 in which the guide elements (12) are rectangularly-shaped projections of the leaf (10) and the pivot formations (16,18) are complementarily-shaped notches of the channels (14).

9. A front seat for a car incorporating a seating assembly according to any preceding claim.

10. A motor road vehicle incorporating a seating assembly according to any preceding claim.

## Patentansprüche

1. Sitzanordnung für ein Fahrzeug, umfassend einen Sitz mit einem Unterteil und einer Rückenlehne (2), wobei die Sitzanordnung weiter eine Tischanordnung einschließt, die eine an der Sitzrückenlehne (2) befestigte Platte (10) einschließt, wobei die Platte in Bezug zur Sitzrückenlehne (2) verschiebbar und verschwenkbar ist, **dadurch gekennzeichnet, dass** die Platte (10) zwischen einer ersten Stelle, an der sie nur zwischen einer geschlossenen und einer gekippten Stellung verschwenkt werden kann, und einer zweiten Stelle, an der sie nur zwischen der gekippten Stellung und einer offenen Stellung verschwenkt werden kann, verschiebbar ist.

2. Sitzanordnung nach Anspruch 1, bei der eine Mehrzahl der besagten Stellen vorhanden ist, an denen der Tisch geöffnet werden kann.

3. Sitzanordnung nach Anspruch 1 oder Anspruch 2, bei der die Platte (10) eine Auflagefläche einschließt, die allgemein horizontal ist, wenn sich die Platte (10) in der offenen Stellung befindet.

4. Sitzanordnung nach einem vorangehenden Anspruch, bei der die Sitzrückenlehne (2) einen oder mehrere Kanäle (14) trägt, in denen sich Führungselemente (12) der Platte (10) verschieben können.

5. Sitzanordnung nach Anspruch 4 mit zwei entgegengesetzten Kanälen (14), die einander gegenüberliegende offene Seiten aufweisen, zwischen denen die Platte (10) auf einem Paar von Führungselementen (10) verschiebbar getragen wird.

6. Sitzanordnung nach Anspruch 5, bei der die Kanäle auf entgegengesetzten Seitenwänden einer Vertiefung (22) in der Sitzrückenlehne (2) angeordnet sind.

7. Sitzanordnung nach einem der Ansprüche 4 bis 6, bei der der oder jeder Kanal Schwenkstrukturen (16, 18) aufweist, die eine begrenzte Schwenkbewegung der Führungselemente (12) gestatten, wenn sich die Platte (10) an einer von der ersten oder der zweiten Stelle befindet, wobei eine solche Schwenkbewegung verhindert wird, wenn sich die Platte entfernt von der ersten oder der zweiten Stelle befindet.

8. Sitzanordnung nach Anspruch 7, bei der die Führungselemente (12) rechteckig geformte Vorsprünge der Platte (10) sind, und die Schwenkstrukturen (16, 18) komplementär geformte Einkerbungen der Kanäle (14) sind.

9. Vordersitz für ein Auto, enthaltend eine Sitzanordnung nach einem vorangehenden Anspruch.

10. Motorstraßenfahrzeug, enthaltend eine Sitzanordnung nach einem vorangehenden Anspruch.

## Revendications

1. Un ensemble ou montage de siège pour un véhicule, comprenant un siège ayant une base et un dossier (2), l'ensemble de siège comprenant en outre un ensemble de table comprenant une tablette ou plaquette (10) fixée au dossier de siège (2), la tablette étant susceptible de coulisser et de pivoter par rapport au dossier de siège (2), **caractérisé en ce que** la tablette (10) est susceptible de coulisser entre un premier emplacement, auquel elle peut être pivotée uniquement entre une position fermée et une position basculée, et un deuxième emplacement, auquel elle peut être pivotée uniquement entre ladite première position basculée et une position ouverte.

2. Un ensemble de siège selon la revendication 1, dans lequel est prévu une pluralité desdits deuxièmes emplacements auxquels la table peut être ouverte.

3. Un ensemble de siège selon la revendication 1 ou la revendication 2, dans lequel la tablette (10) comprend une surface support, globalement horizontale lorsque la tablette (10) se trouve à la position ouverte.

4. Un ensemble de siège selon l'une quelconque des revendications précédentes, dans lequel le dossier de siège (2) porte un ou plusieurs canaux (14) dans lesquels des éléments de guidage (12) de la tablette (10) peuvent coulisser.

5. Un ensemble de siège selon la revendication 4 ayant deux canaux (14) opposés ayant chacun des faces ouvertes placées mutuellement en regard, la tablette (10) étant supportée de façon coulissante sur une paire d'éléments de guidage (12).

6. Un ensemble de siège selon la revendication 5,dans lequel les canaux sont placés sur des parois latérales opposées d'une cavité (22) dans le dossier de siège (2).

7. Un ensemble de siège selon l'une quelconque des revendications 4 à 6, dans lequel le ou chaque canal comprend des formations de pivotement (16, 18), permettant une rotation en pivotement limité des éléments de guidage (12) lorsque la tablette (10) se trouve soit au premier soit au deuxième emplacement, une telle rotation de pivotement étant empêchée lorsque la tablette est éloignée des premiers ou deuxièmes emplacements.

8. Un ensemble de siège selon la revendication 7,dans lequel les éléments de guidage (12) sont des saillies, à forme rectangulaire, de la tablette (10) et les formations de pivotement (16, 18) sont des encoches, à forme complémentaire, des canaux (14).

9. Un siège avant pour une voiture, incorporant un ensemble de siège selon l'une quelconque des revendications précédentes.

10. Un véhicule automobile, incorporant un ensemble de siège selon l'une quelconque des revendications précédentes.
